# EUROPEAN PATENT SPECIFICATION

(11) **EP 3 403 885 B1**
(45) Date of publication and mention of the grant of the patent: **20.11.2019**
(21) Application number: 17171463.7
(22) Date of filing: 17.05.2017
(51) Int. Cl.: B60R 16/03

(54) **ON-BOARD MOTOR VEHICLE ELECTRICAL SYSTEM**
BORDEIGENES ELEKTRISCHES SYSTEM EINES KRAFTFAHRZEUGS
SYSTÈME ÉLECTRIQUE DE VÉHICULE AUTOMOBILE EMBARQUÉ

(43) Date of publication of application: 21.11.2018
(73) Proprietor: Mahle International GmbH, 70376 Stuttgart (DE)
(72) Inventor: BARUSCHKE, Wilhelm, 73117 Wangen (DE); GAUTSCH, Laurent, 67600 Mussig (FR); GRIES, Jean-Philippe, 68000 Colmar (FR); HEITZ, Dr. Jérôme, 68100 Mulhouse (FR); LUBRITZ, Oliver, 70197 Stuttgart (DE); TREIER, Joachim, 77728 Oppenau (DE)
(74) Representative: BRP Renaud & Partner mbB Rechtsanwälte Patentanwälte Steuerberater

(56) References cited:
- EP-A1- 2 711 248
- EP-A2- 2 017 935
- DE-A1-102007 026 165
- DE-A1-102015 117 766
- DE-A1-102015 218 178

## Description

The invention relates to an on-board motor vehicle electrical system comprising a first voltage supply system and comprising a second voltage supply system.

The prior art - for example EP 2 711 248 A1 or DE 10 2007 026 165 A1 - already discloses on-board motor vehicle electrical systems which have a first voltage supply system and a second voltage supply system. The first voltage supply system is supplied by means of a first voltage source with a relatively low voltage, and the second voltage supply system is supplied by means of a second voltage source with a relatively high voltage. By way of example, the voltages can be 12 V and 24 V or 12 V and 48 V respectively. The second voltage supply system is used to supply loads such as, for example, heaters, pumps, compressors or else generators, and the first voltage supply system is used to drive the loads.

In order to prevent damage to the electronics and also to the loads as a result of a short circuit, it is necessary to DC-isolate the first voltage supply system and the second voltage supply system from one another. In conventional on-board motor vehicle electrical systems, the first voltage supply system and the second voltage supply system are electrically isolated from one another and connected to one another in a signal-transmitting manner by a coupling element for this purpose. A control apparatus in the first voltage supply system then controls the loads in the second voltage supply system by means of the coupling element. To this end, the current and the voltage on the respective loads are detected in the second voltage supply system and passed to the control apparatus. However, standard-conforming DC-isolation is difficult to ensure here, and therefore there is still a considerable risk of a short circuit and accurate driving of the loads is made difficult.

The object of the invention is therefore to provide an on-board motor vehicle electrical system in which standard-conforming DC-isolation of a first voltage supply system from a second voltage supply system and accurate driving of a load are made possible.

According to the invention, this object is achieved by the subject matter of independent Claim 1. Advantageous embodiments are the subject matter of the dependent claims.

The present invention is based on the general idea of driving a load from the second voltage supply system in an on-board motor vehicle electrical system comprising a first voltage supply system and comprising a second voltage supply system. In the on-board motor vehicle electrical system, the first voltage supply system has a first voltage source with a relatively low voltage, and the second voltage supply system has a second voltage source with a relatively high voltage, wherein the magnitude of the relatively low voltage is below the magnitude of the relatively high voltage. The first voltage supply system and the second voltage supply system are DC-isolated from one another and connected to one another in a signal-transmitting manner by a coupling element. The second voltage supply system has at least one electrical switching element for the load, and the on-board motor vehicle electrical system has a control apparatus for controlling the load by means of the respective switching element. It is already known that the coupling element is connected to the respective switching element in a signal-transmitting manner by means of the control apparatus. The control apparatus is therefore connected to the second voltage supply system in a signal-transmitting manner and measurement data which is detected in the second voltage supply system can be transmitted to the control apparatus without complicated DC-isolation for the purpose of driving the load. In this way, the first voltage supply system and the second voltage supply system remain isolated from one another in a standard-conforming manner and accurate driving of the loads is made possible.

According to the invention, the first voltage supply system has an additional control apparatus, and the additional control apparatus is connected to the coupling element in a signal-transmitting manner. The additional control apparatus can advantageously be electrically connected to the first voltage source. In this case, the additional control apparatus can be used, for example, to evaluate and pass on the data which is transmitted by an LIN interface. In addition, it is possible for small loads in the first voltage supply system to be driven by the additional control apparatus, even if the second voltage supply system is decoupled from the first voltage supply system.

According to the invention, the first voltage source with the relatively low voltage supplies the first voltage supply system, and the second voltage source with the relatively high voltage supplies the second voltage supply system. In this case, a relatively low voltage is defined as a voltage of which the magnitude is below the magnitude of the relatively high voltage. By way of example, the first voltage supply system and the second voltage supply system can have voltages of 12 V and 24 V or 12 V and 48 V respectively. In this case, the second voltage supply system with a relatively high voltage supplies at least one load which has a high energy requirement and cannot be supplied by means of the first voltage supply system with a relatively low voltage. The load can be, for example, an electric motor, a generator, an electric heater, a compressor, an electric pump, an electric power steering arrangement, a roll stabilization arrangement, an electric fan motor, an electrical converter or else a battery. The first voltage supply system is used for external driving by means of an LIN interface (Local Interconnect Network interface).

The first voltage supply system and the second voltage supply system are DC-isolated from one another and connected to one another in a signal-transmitting manner by at least one coupling element. The coupling element can have, for example, an isolation amplifier, preferably an optocoupler, or a diode or an analogue/digital converter. Drive signals are transmitted to the control apparatus by the coupling element, the said control apparatus then operating the respective switching element and thereby driving the respective load.

In an advantageous development of the solution according to the invention, it is provided that the control apparatus is electrically connected to the first voltage source. As an alternative, the control apparatus can be electrically connected to the second voltage source. In order to make it possible for the required voltage to be supplied to the control apparatus, it is provided that the control apparatus is electrically connected to the first voltage source or to the second voltage source by a DC voltage converter. In addition, DC-isolation of the control apparatus from the first voltage supply system is made possible by the DC voltage converter.

In order to DC-isolate the first voltage supply system and the second voltage supply system in a standard-conforming manner, it is provided that the first voltage supply system has a first earth connection and the second voltage supply system has a second earth connection, the said first earth connection and the said second earth connection being DC-isolated from one another. If, for example, the second voltage supply system is decoupled from the first voltage supply system, the first voltage supply system and the second voltage supply system each have an earth connection and the risk of a short circuit is minimized.

It is advantageously provided that the second voltage supply system has a measuring arrangement, and that the measuring arrangement is connected to the control apparatus in a signal-transmitting manner. The measuring arrangement can detect, for example, a current flowing through the load and a voltage which is applied in the second voltage supply system and transmit them to the control apparatus for evaluation. The control apparatus can drive the respective load more accurately on the basis of the detected measurement data. In addition, the measurement data are detected and transmitted in a manner DC-isolated from the first voltage supply system, so that standard-conforming DC-isolation in the on-board motor vehicle electrical system is made possible.

The first voltage supply system can advantageously have an additional measuring arrangement, and the additional measuring arrangement can be electrically connected to the additional control apparatus. By way of example, the voltage which is applied in the first voltage supply system can be monitored by the additional measuring arrangement. As an alternative, a current flowing across a small load can also be measured and, as a result, the small load can be driven more accurately.

Both the additional control apparatus and also the control apparatus can each comprise a microcontroller. The coupling element can have, for example, an isolation amplifier, preferably an optocoupler, or a diode or an analogue/digital converter, and the switching element can have, for example, a field-effect transistor, preferably a metal-oxide-semiconductor field-effect transistor, or a circuit breaker.

Further important features and advantages of the invention can be gathered from the dependent claims, from the drawings and from the associated description of the figures with reference to the drawings.

It goes without saying that the features which are mentioned above and those still to be explained below can be used not only in the respectively specified combination but rather also in other combinations or on their own, without departing from the scope of the present invention.

Preferred exemplary embodiments of the invention are shown in the drawings and will be explained in greater detail in the following description, with identical reference symbols relating to identical or similar or functionally identical components.

In the drawings
- Fig. 1: schematically shows a view of an already known on-board motor vehicle electrical system comprising a control apparatus;
- Fig. 2: schematically shows a view of an already known on-board motor vehicle electrical system comprising a control apparatus and comprising a measuring arrangement;
- Fig. 3: schematically shows a view of an on-board motor vehicle electrical system according to the invention comprising an additional control apparatus;
- Fig. 4: schematically shows a view of an on-board motor vehicle electrical system according to the invention comprising an additional control apparatus and comprising a measuring arrangement.

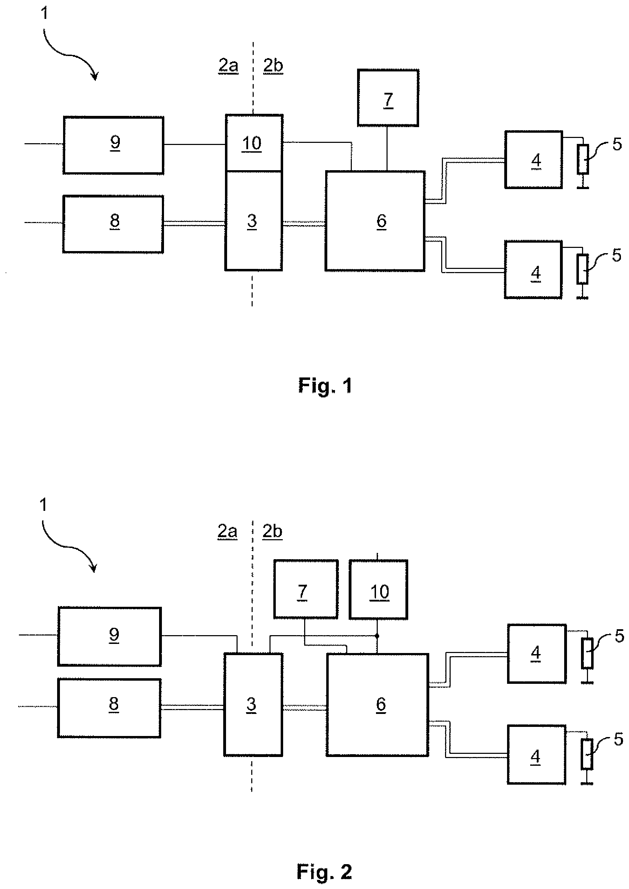

Fig. 1 and Fig. 2 show schematic views of an already known on-board motor vehicle electrical system 1. In the on-board motor vehicle electrical system 1, a first voltage supply system 2a has a first voltage source with a relatively low voltage, and a second voltage supply system 2b has a second voltage source with a relatively high voltage. In this case, the magnitude of the relatively low voltage is below the magnitude of the relatively high voltage, and the voltages can be, for example, 12 V and 24 V or 12 V and 48 V respectively. The first voltage supply system 2a and the second voltage supply system 2b are DC-isolated from one another and connected to one another in a signal-transmitting manner by a coupling element 3. The coupling element 3 can have, for example, an isolation amplifier, preferably an optocoupler.

The second voltage supply system 2b has at least one electrical switching element 4 for a load 5, wherein a control apparatus 6 is arranged between the coupling element 3 and the respective switching element 4 and controls the load 5 by means of the respective switching element 4. The load 5 can be, for example, an electric motor, a generator, an electric heater, a compressor, an electric pump, an electric power steering arrangement, a roll stabilization arrangement, an electric fan motor, an electrical converter or else a battery. The switching element 4 can have, for example, a field-effect transistor, preferably a metal-oxide-semiconductor field-effect transistor, or a circuit breaker, and the control apparatus 6 can comprise a microcontroller.

Furthermore, the second voltage supply system 2b has a measuring arrangement 7 which can detect, for example, the voltage which is applied in the second voltage supply system or the current and transmit them to the control apparatus 6. The first voltage supply system 2a has an LIN interface 8 for external driving and also further electrical components 9.

In Fig. 1, the control apparatus 6 is electrically conductively connected to the first voltage supply system 2a. In order to supply the control apparatus with the required voltage and in order to also ensure DC-isolation between the first voltage supply system 2a and the second voltage supply system 2b here, the control apparatus 6 is connected to the first voltage supply system 2a by a voltage converter 10. In Fig. 2, the control apparatus 6 is electrically conductively connected to the second voltage supply system 2b, and the voltage converter 10 converts the voltage which is applied in the second voltage supply system 2b for the control apparatus 6 to a smaller magnitude.

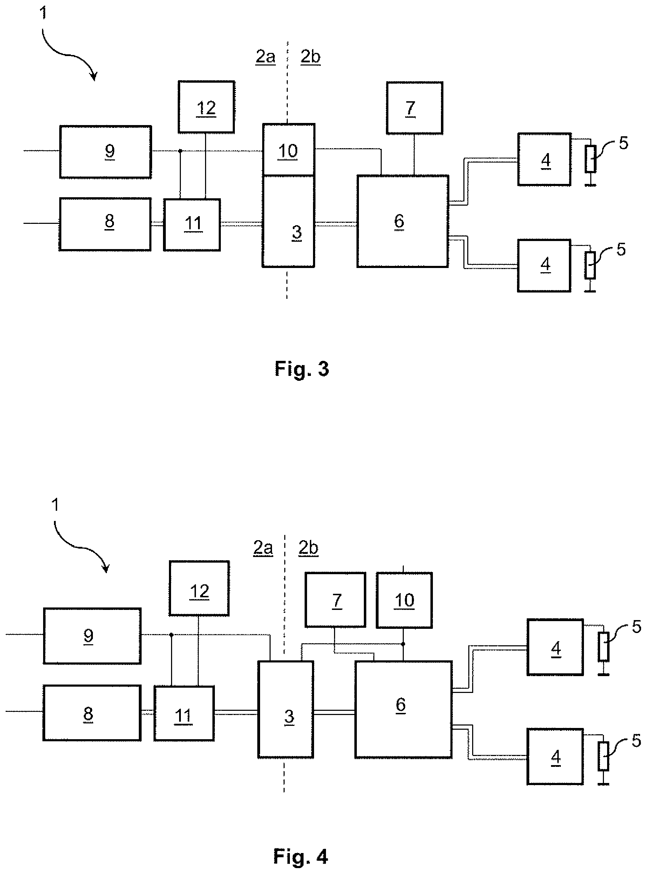

Fig. 3 and Fig. 4 show schematic views of the on-board motor vehicle electrical system 1 according to the invention comprising an additional control apparatus 11. The additional control apparatus 11 is connected to the coupling element 3 in a signal-transmitting manner and is used to evaluate and pass on the data which is transmitted by the LIN interface 8. The first voltage supply system 2a additionally has an additional measuring arrangement 12 which is electrically connected to the additional control apparatus 11. The voltage which is applied in the first voltage supply system 2a is monitored by the additional measuring arrangement 12.

Standard-conforming DC-isolation of the first voltage supply system 2a from the second voltage supply system 2b and accurate driving of the load 5 is made possible by the on-board motor vehicle electrical system 1 according to the invention.

## Claims

1. On-board motor vehicle electrical system (1) comprising a first voltage supply system (2a) and comprising a second voltage supply system (2b),
- wherein the first voltage supply system (2a) has a first voltage source with a relatively low voltage, and the second voltage supply system (2b) has a second voltage source with a relatively high voltage,
- wherein the first voltage supply system (2a) and the second voltage supply system (2b) are DC-isolated from one another and connected to one another in a signal-transmitting manner by a coupling element (3),
- wherein the second voltage supply system (2b) has at least one electrical switching element (4) for a load (5), and
- wherein the on-board motor vehicle electrical system (1) has a control apparatus (6) for controlling the load (5) by means of the respective switching element (4),
- wherein the coupling element (3) is connected to the respective switching element (4) in a signal-transmitting manner by means of the control apparatus (6),
**characterized**
- **in that** the first voltage supply system (2a) has an additional control apparatus (11), and
- **in that** the additional control apparatus (11) is connected to the coupling element (3) in a signal-transmitting manner.

2. On-board motor vehicle electrical system (1) according to Claim 1,
**characterized**
**in that** the control apparatus (6) is electrically connected to the first voltage source.

3. On-board motor vehicle electrical system (1) according to Claim 2,
**characterized**
**in that** the control apparatus (6) is electrically connected to the first voltage source by a DC voltage converter (10).

4. On-board motor vehicle electrical system (1) according to claim 1,
**characterized**
**in that** the control apparatus (6) is electrically connected to the second voltage source.

5. On-board motor vehicle electrical system (1) according to Claim 4,
**characterized**
**in that** the control apparatus (6) is electrically connected to the second voltage source by a DC voltage converter (10).

6. On-board motor vehicle electrical system (1) according to one of the preceding claims,
**characterized**
**in that** the first voltage supply system (2a) has a first earth connection and the second voltage supply system (2b) has a second earth connection, the said first earth connection and the said second earth connection being DC-isolated from one another.

7. On-board motor vehicle electrical system (1) according to one of the preceding claims,
**characterized**
**in that** the second voltage supply system (2b) has a measuring arrangement (7), and in that the measuring arrangement (7) is connected to the control apparatus (6) in a signal-transmitting manner.

8. On-board motor vehicle electrical system (1) according to one of the preceding Claims,
**characterized**
**in that** the additional control apparatus (11) is electrically connected to the first voltage source.

9. On-board motor vehicle electrical system (1) according to one of the preceding Claims,
**characterized**
**in that** the first voltage supply system (2a) has an additional measuring arrangement (12), and in that the additional measuring arrangement (12) is electrically connected to the additional control apparatus (11).

10. On-board motor vehicle electrical system (1) according to one of one of the preceding Claims,
**characterized**
**in that** the additional control apparatus (11) comprises a microcontroller.

11. On-board motor vehicle electrical system (1) according to one of the preceding claims,
**characterized**
**in that** the control apparatus (6) comprises a microcontroller.

12. On-board motor vehicle electrical system (1) according to one of the preceding claims,
**characterized**
**in that** the coupling element (3) has an isolation amplifier, preferably an optocoupler, or a diode or an analogue/digital converter.

13. On-board motor vehicle electrical system (1) according to one of the preceding claims,
**characterized**
**in that** the switching element (4) has a field-effect transistor, preferably a metal-oxide-semiconductor field-effect transistor, or a circuit breaker.

## Patentansprüche

1. Bordeigenes elektrisches System eines Kraftfahrzeugs (1), die ein erstes Spannungsversorgungssystem (2a) umfasst, und ein zweites Spannungsversorgungssystem (2b) umfasst,
- wobei das erste Spannungsversorgungssystem (2a) eine erste Spannungsquelle mit einer relativ niedrigen Spannung aufweist, und das zweite Spannungsversorgungssystem (2b) eine zweite Spannungsquelle mit einer relativ hohen Spannung aufweist,
- wobei das erste Spannungsversorgungssystem (2a) und das zweite Spannungsversorgungssystem (2b) voneinander galvanisch getrennt und miteinander durch ein Kopplungselement (3) signalübertragend verbunden sind,
- wobei das zweite Spannungsversorgungssystem (2b) mindestens ein elektrisches Schaltelement (4) für eine Last (5) aufweist, und
- wobei das bordeigene elektrische System eines Kraftfahrzeugs (1) eine Steuereinrichtung (6) zum Steuern der Last (5) mittels des jeweiligen Schaltelements (4) aufweist,
- wobei das Kopplungselement (3) mit dem jeweiligen Schaltelement (4) mittels der Steuereinrichtung (6) signalübertragend verbunden ist,
**dadurch gekennzeichnet,**
- **dass** das erste Spannungsversorgungssystem (2a) eine zusätzliche Steuereinrichtung (11) aufweist, und
- **dass** die zusätzliche Steuereinrichtung (11) mit dem Kopplungselement (3) signalübertragend verbunden ist.

2. Bordeigenes elektrisches System eines Kraftfahrzeugs (1) nach Anspruch 1,
**dadurch gekennzeichnet,**
**dass** die Steuereinrichtung (6) elektrisch mit der ersten Spannungsquelle verbunden ist.

3. Bordeigenes elektrisches System eines Kraftfahrzeugs (1) nach Anspruch 2,
**dadurch gekennzeichnet,**
**dass** die Steuereinrichtung (6) elektrisch mit der ersten Spannungsquelle durch einen DC-Spannungswandler (10) verbunden ist.

4. Bordeigenes elektrisches System eines Kraftfahrzeugs (1) nach Anspruch 1,
**dadurch gekennzeichnet,**
**dass** die Steuereinrichtung (6) elektrisch mit der zweiten Spannungsquelle verbunden ist.

5. Bordeigenes elektrisches System eines Kraftfahrzeugs (1) nach Anspruch 4,
**dadurch gekennzeichnet,**
**dass** die Steuereinrichtung (6) elektrisch mit der zweiten Spannungsquelle durch einen DC-Spannungswandler (10) verbunden ist.

6. Bordeigenes elektrisches System eines Kraftfahrzeugs (1) nach einem der vorstehenden Ansprüche,
**dadurch gekennzeichnet,**
**dass** das erste Spannungsversorgungssystem (2a) eine erste Masseverbindung aufweist, und dass das zweite Spannungsversorgungssystem (2b) eine zweite Masseverbindung aufweist, wobei die erste Masseverbindung und die zweite Masseverbindung voneinander galvanisch getrennt sind.

7. Bordeigenes elektrisches System eines Kraftfahrzeugs (1) nach einem der vorstehenden Ansprüche,
**dadurch gekennzeichnet,**
**dass** das zweite Spannungsversorgungssystem (2b) eine Messanordnung (7) aufweist, und dass die Messanordnung (7) mit der Steuereinrichtung (6) signalübertragend verbunden ist.

8. Bordeigenes elektrisches System eines Kraftfahrzeugs (1) nach einem der vorstehenden Ansprüche,
**dadurch gekennzeichnet,**
**dass** die zusätzliche Steuereinrichtung (11) elektrisch mit der ersten Spannungsquelle verbunden ist.

9. Bordeigenes elektrisches System eines Kraftfahrzeugs (1) nach einem der vorstehenden Ansprüche,
**dadurch gekennzeichnet,**
**dass** das erste Spannungsversorgungssystem (2a) eine zusätzliche Messanordnung (12) aufweist, und dass die zusätzliche Messanordnung (12) elektrisch mit der zusätzlichen Steuereinrichtung (11) verbunden ist.

10. Bordeigenes elektrisches System eines Kraftfahrzeugs (1) nach einem der vorstehenden Ansprüche,
**dadurch gekennzeichnet,**
**dass** die zusätzliche Steuereinrichtung (11) einen Mikrocontroller umfasst.

11. Bordeigenes elektrisches System eines Kraftfahrzeugs (1) nach einem der vorstehenden Ansprüche,
**dadurch gekennzeichnet,**
**dass** die Steuereinrichtung (6) einen Mikrocontroller umfasst.

12. Bordeigenes elektrisches System eines Kraftfahrzeugs (1) nach einem der vorstehenden Ansprüche,
**dadurch gekennzeichnet,**
**dass** das Kopplungselement (3) einen Trennverstärker, bevorzugt einen Optokoppler oder eine Diode oder einen Analog-/Digitalwandler, aufweist.

13. Bordeigenes elektrisches System eines Kraftfahrzeugs (1) nach einem der vorstehenden Ansprüche,
**dadurch gekennzeichnet,**
**dass** das Schaltelement (4) einen Feldeffekttransistor, bevorzugt einen Metalloxidhalbleiter-Feldeffekttransistor oder einen Leistungsschalter aufweist.

## Revendications

1. Système électrique de véhicule automobile embarqué (1) comprenant un premier système d'alimentation en tension (2a) et comprenant un second système d'alimentation en tension (2b),
- dans lequel le premier système d'alimentation en tension (2a) présente une première source de tension avec une tension relativement basse, et le second système d'alimentation en tension (2b) présente une seconde source de tension avec une tension relativement haute,
- dans lequel le premier système d'alimentation en tension (2a) et le second système d'alimentation en tension (2b) sont isolés entre eux en CC et connectés entre eux par un élément de couplage (3) de façon à transmettre le signal,
- dans lequel le second système d'alimentation en tension (2b) présente au moins un élément de commutation électrique (4) pour une charge (5), et
- dans lequel le système électrique de véhicule automobile embarqué (1) présente un appareil de commande (6) pour commander la charge (5) au moyen de l'élément de commutation respectif (4),
- dans lequel l'élément de couplage (3) est connecté à l'élément de commutation respectif (4) au moyen de l'appareil de commande (6) de façon à transmettre le signal,
**caractérisé**
- **en ce que** le premier système d'alimentation en tension (2a) présente un appareil de commande supplémentaire (11), et
- **en ce que** l'appareil de commande supplémentaire (11) est connecté à l'élément de couplage (3) en transmission de signal.

2. Système électrique de véhicule automobile embarqué (1) selon la revendication 1,
**caractérisé**
**en ce que** l'appareil de commande (6) est électriquement connecté à la première source de tension.

3. Système électrique de véhicule automobile embarqué (1) selon la revendication 2,
**caractérisé**
**en ce que** l'appareil de commande (6) est électriquement connecté à la première source de tension par un convertisseur de tension en CC (10).

4. Système électrique de véhicule automobile embarqué (1) selon la revendication 1,
**caractérisé**
**en ce que** l'appareil de commande (6) est électriquement connecté à la seconde source de tension.

5. Système électrique de véhicule automobile embarqué (1) selon la revendication 4,
**caractérisé**
**en ce que** l'appareil de commande (6) est électriquement connecté à la seconde source de tension par un convertisseur de tension en CC (10).

6. Système électrique de véhicule automobile embarqué (1) selon l'une quelconque des revendications précédentes,
**caractérisé**
**en ce que** le premier système d'alimentation en tension (2a) présente une première prise de terre et le second système d'alimentation en tension (2b) présente une seconde prise de terre, ladite première prise de terre et ladite seconde prise de terre étant isolées entre elles en CC.

7. Système électrique de véhicule automobile embarqué (1) selon l'une quelconque des revendications précédentes,
**caractérisé**
**en ce que** le second système d'alimentation en tension (2b) présente un agencement de mesure (7), et ce que l'agencement de mesure (7) est connecté à l'appareil de commande (6) de façon à transmettre le signal.

8. Système électrique de véhicule automobile embarqué (1) selon l'une quelconque des revendications précédentes
**caractérisé**
**en ce que** l'appareil de commande supplémentaire (11) est électriquement connecté à la première source de tension.

9. Système électrique de véhicule automobile embarqué (1) selon l'une quelconque des revendications précédentes,
**caractérisé**
**en ce que** le premier système d'alimentation en tension (2a) présente un agencement de mesure supplémentaire (12), et en ce que l'agencement de mesure supplémentaire (12) est électriquement connecté à l'appareil de commande supplémentaire (11).

10. Système électrique de véhicule automobile embarqué (1) selon l'une quelconque des revendications précédentes,
**caractérisé**
**en ce que** l'appareil de commande supplémentaire (11) comprend un microcontrôleur.

11. Système électrique de véhicule automobile embarqué (1) selon l'une quelconque des revendications précédentes,
**caractérisé**
**en ce que** l'appareil de commande (6) comprend un microcontrôleur.

12. Système électrique de véhicule automobile embarqué (1) selon l'une quelconque des revendications précédentes,
**caractérisé**
**en ce que** l'élément de couplage (3) présente un amplificateur d'isolation, de préférence un optocoupleur, ou une diode ou un convertisseur analogique/numérique.

13. Système électrique de véhicule automobile embarqué (1) selon l'une quelconque des revendications précédentes,
**caractérisé**
**en ce que** l'élément de commutation (4) présente un transistor à effet de champ, de préférence un transistor à effet de champ à oxydes métalliques, ou un disjoncteur.
